(19) Europäisches Patentamt
European Patent Office
Office européen des brevets

(11) EP 4 810 460 A1

(12) EUROPEAN PATENT APPLICATION
published in accordance with Art. 153(4) EPC

(43) Date of publication:
**23.09.2026 Bulletin 2026/39**

(21) Application number: **24891510.0**

(22) Date of filing: **15.11.2024**

(51) International Patent Classification (IPC):
***C04B 40/04*** (2006.01) ***B28B 11/24*** (2006.01)
***C04B 41/63*** (2006.01)

(52) Cooperative Patent Classification (CPC):
**B28B 11/24; C04B 40/04; C04B 41/63; C09D 5/00; C09D 7/65; C09D 167/00**

(86) International application number:
**PCT/JP2024/040663**

(87) International publication number:
**WO 2025/105475 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 JP 2023195275**

(71) Applicant: **Kao Corporation**
**Tokyo 103-8210 (JP)**

(72) Inventors:
- **KASHIWAGI Hirotaka**
**Tokyo 103-8210 (JP)**
- **KAWAKAMI Hiroyuki**
**Tokyo 103-8210 (JP)**
- **SHIMADA Kohei**
**Tokyo 103-8210 (JP)**
- **NAGOSHI Yuto**
**Tokyo 103-8210 (JP)**

(74) Representative: **Hoffmann Eitle**
**Patent- und Rechtsanwälte PartmbB**
**Arabellastraße 30**
**81925 München (DE)**

# (54) FILM CURING AGENT FOR HYDRAULIC COMPOSITION

(57) The present invention provides a coating curing agent for hydraulic compositions capable of suppressing moisture loss with time.

The coating curing agent for hydraulic compositions contains (A) a polyester having a constituent unit derived from a polyalkylene glycol.

[FIG. 3]

(a)

[FIG. 3]

(b)

## Description

Field of the Invention

The present invention relates to a coating curing agent for hydraulic compositions and a curing method using the same.

Background of the Invention

Examples of curing methods for cement-concrete pavement generally include water curing, mat curing, coating curing, and the like. These curing methods serve to prevent drying shrinkage cracking and deterioration in surface strength caused by evaporation of moisture from the pavement surface. However, water curing needs to be repeated depending on the rate of moisture evaporation, and mat curing requires a large number of mats to cover the pavement surface and poses handling risks at windy sites; thus, both methods have the problem of involving cumbersome work. In order to reduce such workload, development of coating curing agents for coating curing, i.e., for forming a coating film on the pavement surface to achieve moisture retention at the pavement surface, has been promoted.

JP-A 2014-28729 discloses a coating curing agent for preventing initial drying during curing of concrete, the agent being a material mainly comprising a water-dispersed polyester and being applied, after a predetermined hardening period of poured concrete, to a surface exposed upon removal of the formwork. JP-A 2006-248868 discloses a coating curing agent for cement-based materials, the agent being applied or sprayed before a cement-based material hardens and comprising a polymer emulsion and a lithium salt.

Summary of the Invention

Coating curing agents for hydraulic compositions are required to exhibit an excellent moisture retention effect during the period until a cement material reaches a predetermined strength. For example, in cement-concrete pavement applications, a coating curing agent having high moisture retention performance over a period of about one week is required, and conventional coating curing agents have room for improvement in terms of long-term moisture retention performance.

The present invention provides a coating curing agent for hydraulic compositions capable of suppressing moisture loss with time over a long period during curing of a hydraulic composition.

In an embodiment, the present invention provides a coating curing agent for hydraulic compositions, containing (A) a polyester [hereinafter component (A)] having a constituent unit derived from a polyalkylene glycol.

Further, in another embodiment, the present invention provides a curing method for a hydraulic composition containing a hydraulic powder and water, the method including: applying, to a surface of the hydraulic composition, a treatment liquid containing (A) a polyester [hereinafter component (A)] having a constituent unit derived from a polyalkylene glycol, and water; and thereafter curing the hydraulic composition.

The coating curing agent for hydraulic compositions of the present invention is capable of suppressing moisture loss with time during curing of a hydraulic composition. This ability is expected to make it possible to reduce labor required for curing work as compared with conventional water curing and mat curing, and to provide a surface cracking suppression effect. Further, the coating curing agent for hydraulic compositions of the present invention can be applied in the presence of bleed water on the surface of the hydraulic composition, and offers excellent flexibility in the timing of application of the coating curing agent; thus, a reduction in working time is expected.

The mechanism by which the effects of the present invention are obtained is not certain; however, it is considered as follows.

The polyester in the present invention has, in the backbone of its molecular structure, a constituent unit derived from polyalkylene glycol as a unit, and furthermore, the constituent unit is derived from a polyalkylene glycol having a certain length; thus, the polyester is excellent in stability in water. Therefore, the polyester in the present invention can exist in water as uniform and fine particles, and is excellent in stability against metal ions and the like derived from a hydraulic composition; thus, the polyester is unlikely to undergo state changes such as aggregation and the like even upon contact with a surface of a hydraulic composition material. Accordingly, it is considered that, when the treatment liquid containing the polyester is applied to a surface of a hydraulic composition material, the polyester can form a uniform polymer coating film on the surface of the hydraulic composition material. Further, from the viewpoint of the molecular structure, the polyester has a highly polar ester structure in its main chain, and thus exhibits increased adhesion to cement and aggregates. It is considered that the increased adhesion makes it possible for the polyester to form a dense coating film without gaps on a surface of a hydraulic composition containing cement. It is considered that, as a result of forming the uniform and dense polymer coating film, evaporation pathways for moisture are highly blocked by the film, thereby making it possible to suppress evaporation of moisture from a hydraulic composition containing cement over a long period.

Brief Description of the Drawings

[FIG. 1] FIG. 1 is a photograph showing a result of crack evaluation of Comparative Example 3.
[FIG. 2] FIG. 2 is a set of photographs showing results of crack evaluation of Example 8.
[FIG. 3] FIG. 3 is a set of photographs showing results of crack evaluation of Example 1.
[FIG. 4] FIG. 4 is a graph showing changes in the amount of moisture loss with time.

Embodiments of the Invention

[Coating curing agent for hydraulic compositions]

In an embodiment, the coating curing agent for hydraulic compositions of the present invention contains (A) a polyester having a constituent unit derived from polyalkylene glycol.

Examples of constituent units constituting the polyester of component (A) include, for example, constituent units derived from polyhydric alcohols (including polyalkylene glycols) and constituent units derived from polybasic acids. As used herein, the term "constituent unit" refers to a structure corresponding to 1 mol of each raw material monomer of the polyester. For a constituent unit derived from polyalkylene glycol, polyalkylene glycol is regarded as a raw material monomer. The molar ratios of constituent units derived from the raw material monomers among all constituent units of the polyester of component (A) can be calculated from the amounts of the raw material monomers charged (molar ratios). Note that the acid value of the polyester can be adjusted, for example, by changing a ratio of constituent units derived from polyhydric alcohols to constituent units derived from polybasic acids, by using a carboxylic acid ester, or by blocking the acid value using a monohydric alcohol.

<Constituent unit derived from polyalkylene glycol>

As a raw material monomer for a constituent unit derived from polyalkylene glycol, for example, one or more selected from polyethylene glycol (or polyethylene oxide), poly(ethylene/propylene) glycol (or poly(ethylene/propylene) oxide), and polypropylene glycol (or polypropylene oxide) can be used, and preferably polyethylene glycol (or polyethylene oxide) can be used. Hereinafter, "polyalkylene glycol" may be replaced with "polyalkylene oxide."

A weight-average molecular weight of polyalkylene glycol as a raw material monomer may be, for example, preferably 500 or more, more preferably 1,000 or more, and preferably 20,000 or less, more preferably 10,000 or less, from the viewpoint of stability in water. Weight-average molecular weight and number-average molecular weight can be determined by a gel permeation chromatography (GPC) method described later.

A constituent unit derived from polyalkylene glycol may be derived from a combination of two or more different polyalkylene glycols, provided that their weight-average molecular weights each fall within the above range. For example, as two or more raw material monomers having different weight-average molecular weights, from the viewpoint of formation of a coating film, for example, two or more polyalkylene glycols having different weight-average molecular weights, each being preferably 500 or more and preferably 2,000 or less, may be combined, and for example, two or more polyethylene glycols having different weight-average molecular weights, each being preferably 500 or more and preferably 2,000 or less, may be combined.

Note that, instead of a constituent unit derived from polyalkylene glycol, for example, a constituent unit derived from polyvinyl alcohol may be used, and for example, a constituent unit derived from polyalkylene glycol and a constituent unit derived from polyvinyl alcohol may be used in combination.

A proportion of constituent units derived from polyalkylene glycol among all constituent units constituting component (A) may be, for example, preferably 1 mol% or more, more preferably 1.5 mol% or more, further preferably 2 mol% or more, and preferably 30 mol% or less, more preferably 20 mol% or less, further preferably 10 mol% or less, furthermore preferably 6 mol% or less. The above content may be a value based on the amount of polyalkylene glycol used and blended during preparation of component (A).

<Constituent unit derived from polyhydric alcohol other than polyalkylene glycol>

Further, component (A) may have, for example, constituent units derived from polyhydric alcohols other than polyalkylene glycols. As raw material monomers for constituent units derived from polyhydric alcohols (excluding polyalkylene glycols), for example, one or more selected from dihydric alcohols and trihydric or higher polyhydric alcohols, preferably one or more selected from aromatic polyhydric alcohols and aliphatic polyhydric alcohols (excluding polyalkylene glycols), more preferably an aromatic polyhydric alcohol may be used.

Examples of raw material monomers for constituent units derived from polyhydric alcohols (excluding polyalkylene glycols) include, for example, aliphatic dihydric alcohols such as ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, dipropylene glycol, 1,4-cyclohexanedimethanol, and the like; aromatic dihydric alcohols such as alkylene oxide adducts of bisphenol A (2,2-bis(4-hydroxyphenyl)propane), hydrogenated bisphenol A, alkylene oxide adducts of hydrogenated bisphenol A, and the like; trihydric alcohols such as 1,2,4-butanetriol, 1,2,5-pentanetriol, glycerol, 2-methylpropanetriol, 2-methyl-1,2,4-butanetriol, trimethylolethane, trimethylolpropane, 1,3,5-trihydroxymethylbenzene, and the like; and trihydric or higher polyhydric alcohols such as dipentaerythritol, sorbitol, 1,2,3,6-hexanetetrol, 1,4-sorbitan, pentaerythritol, tripentaerythritol, and the like, etc. Note that the constituent units derived from polyhydric alcohols (excluding polyalkylene glycols) may also include constituent units derived from alkylene glycol moieties of polyalkylene glycols as constituent units of component (A).

From the viewpoint of formation of a coating film, constituent units derived from polyhydric alcohols (excluding polyalkylene glycols), preferably constituent units derived from aromatic polyhydric alcohols, may be, for example, preferably constituent units derived from one or more selected from alkylene oxide adducts of bisphenol A (such as propylene oxide adducts of bisphenol A, ethylene oxide adducts of bisphenol A, and the like), 1,4-butanediol, 1,6-hexanediol, hydrogenated bisphenol A, and alkylene oxide adducts of hydrogenated bisphenol A, more preferably constituent units derived from alkylene oxide adducts of bisphenol A.

Examples of alkylene oxide adducts of bisphenol A include, for example, an alkylene oxide adduct of bisphenol A represented by the following formula (I):

$$H-(OR^1)_x-O-C_6H_4-C(CH_3)_2-C_6H_4-O-(R^1O)_y-H \quad (I)$$

wherein $OR^1$ and $R^1O$ each represent an alkylene oxide; $R^1$ is an alkylene group having 2 or 3 carbons; and x and y each represent an average number of added moles of an alkylene oxide, the number being positive.

In the formula (I), $R^1$ may be, for example, preferably an alkylene group having 3 carbons.

In the formula (I), the sum of x and y may be, for example, preferably 1 or more, more preferably 1.5 or more, and preferably 16 or less, more preferably 8 or less, further preferably 4 or less.

In an alkylene oxide adduct of bisphenol A represented by the formula (I), $R^1$ may be, for example, preferably an alkylene group having 3 carbons, and the sum of x and y may be preferably 1.5 or more and preferably 4 or less.

A proportion of the total of constituent units derived from polyalkylene glycol and constituent units derived from any polyhydric alcohol (excluding polyalkylene glycols) among all constituent units constituting component (A) may be, for example, preferably 50 mol% or more, and preferably 70 mol% or less, more preferably 65 mol% or less, further preferably 60 mol% or less. The above content may be a value based on the amounts of polyalkylene glycol and any polyhydric alcohol (excluding polyalkylene glycols) used and blended during preparation of component (A).

A proportion of constituent units derived from aromatic polyhydric alcohols, preferably constituent units derived from alkylene oxide adducts of bisphenol A, among all constituent units constituting component (A) may be, for example, preferably 30 mol% or more, more preferably 40 mol% or more, further preferably 50 mol% or more, and preferably 65 mol% or less, more preferably 60 mol% or less, further preferably 55 mol% or less. The above content may be a value based on the amounts of aromatic polyhydric alcohols, preferably alkylene oxide adducts of bisphenol A, used and blended during preparation of component (A).

From the viewpoint of productivity of component (A), a proportion of constituent units derived from aromatic polyhydric alcohols, preferably constituent units derived from alkylene oxide adducts of bisphenol A, among all constituent units derived from polyhydric alcohols may be, for example, preferably 80 mol% or more, more preferably 90 mol% or more, and preferably 97 mol% or less, more preferably 95 mol% or less, and the balance may be a proportion of constituent units derived from aliphatic polyhydric alcohols (including polyalkylene glycols). The above content may be a value based on the amounts of aromatic polyhydric alcohols, preferably alkylene oxide adducts of bisphenol A, used and blended during preparation of component (A).

Note that a proportion of constituent units derived from polyalkylene glycol among all constituent units derived from aliphatic polyhydric alcohols (including polyalkylene glycols) may be preferably 60 mol% or more, more preferably 70 mol% or more, and preferably 100 mol% or less, more preferably 97 mol% or less, further preferably 95 mol% or less, from the viewpoint of moisture retention performance of a coating film.

Component (A) preferably contains smaller amounts of constituent units derived from trihydric or higher polyhydric alcohols. In component (A), a proportion of constituent units derived from trihydric or higher polyhydric alcohols among all constituent units derived from polyhydric alcohols may be, for example, preferably 0 mol% or more and preferably 10 mol% or less. The above content may be a value based on the amounts of trihydric or higher polyhydric alcohols used and blended during preparation of component (A).

<Constituent unit derived from polybasic acid>

Examples of polybasic acids as raw material monomers for constituent units derived from polybasic acids include, for example, polyhydric carboxylic acids. Examples of polyhydric carboxylic acids include aromatic polyhydric carboxylic acids and aliphatic polyhydric carboxylic acids. Further, the polyhydric carboxylic acids include, for example, dihydric carboxylic acids, or acid anhydrides or lower alkyl esters thereof, and trihydric or higher carboxylic acids, or acid anhydrides or lower alkyl esters thereof.

Examples of dihydric carboxylic acids, or acid anhydrides or lower alkyl esters thereof, include, for example, maleic acid, fumaric acid, citraconic acid, itaconic acid, glutaconic acid, phthalic acid, isophthalic acid, terephthalic acid, succinic acid, adipic acid, sebacic acid, azelaic acid, malonic acid, n-dodecenylsuccinic acid, isododecenylsuccinic acid, n-dodecylsuccinic acid, isododecylsuccinic acid, n-octenylsuccinic acid, n-octylsuccinic acid, isooctenylsuccinic acid, isooctylsuccinic acid, and acid anhydrides and lower alkyl esters thereof, and the like.

Examples of trihydric or higher carboxylic acids, or acid anhydrides or lower alkyl esters thereof, include, for example, 1,2,4-benzenetricarboxylic acid, 2,5,7-naphthalenetricarboxylic acid, 1,2,4-naphthalenetricarboxylic acid, 1,2,4-butanetricarboxylic acid, 1,2,5-hexanetricarboxylic acid, 1,3-dicarboxyl-2-methyl-2-methylenecarboxypropane, 1,2,4-cyclohexanetricarboxylic acid, tetra(methylenecarboxyl)methane, 1,2,7,8-octanetetracarboxylic acid, pyromellitic acid, Empol trimer acid, and acid anhydrides and lower alkyl esters thereof, and the like.

Component (A) may have, for example, a constituent unit derived from one or more raw material monomers selected from the above acids. From the viewpoint of formation of a coating film, as raw material monomers, for example, preferably one or more selected from terephthalic acid, isophthalic acid, fumaric acid, succinic acid, adipic acid, n-dodecenylsuccinic acid, and isododecenylsuccinic acid may be used, and more preferably terephthalic acid or fumaric acid may be used.

Component (A) preferably has constituent units derived from, for example, dihydric carboxylic acids, preferably aromatic dihydric carboxylic acids.

A proportion of constituent units derived from dihydric carboxylic acids, preferably aromatic dihydric carboxylic acids, among all constituent units constituting component (A) may be, for example, preferably 30 mol% or more, more preferably 35 mol% or more, further preferably 40 mol% or more, and preferably 50 mol% or less. The above content may be a value based on the amounts of polybasic acids, preferably dihydric carboxylic acids, preferably aromatic dihydric carboxylic acids, used and blended during preparation of component (A).

A proportion of constituent units derived from dihydric carboxylic acids, preferably aromatic dihydric carboxylic acids, among all constituent units derived from polyhydric carboxylic acids may be, for example, preferably 40 mol% or more, more preferably 60 mol% or more, further preferably 80 mol% or more, and preferably 100 mol% or less. The above content may be a value based on the amounts of dihydric carboxylic acids, preferably aromatic dihydric carboxylic acids, used and blended during preparation of component (A).

Component (A) preferably contains smaller amounts of constituent units derived from trihydric or higher polyhydric carboxylic acids, or acid anhydrides or lower alkyl esters thereof. From the viewpoint of stability in water, in component (A), a proportion of constituent units derived from trihydric or higher polyhydric carboxylic acids, or acid anhydrides or lower alkyl esters thereof, among all constituent units derived from the polyhydric carboxylic acids may be, for example, preferably 0 mol% or more and preferably 10 mol% or less. The above content may be a value based on the amounts of trihydric or higher polyhydric carboxylic acids, or acid anhydrides or lower alkyl esters thereof, used and blended during preparation of component (A).

From the viewpoints of stability in water and formation of a coating film, a content of constituent units derived from polybasic acids, preferably polyhydric carboxylic acids, preferably dihydric carboxylic acids, relative to 100 mol of the total of polyhydric alcohols (including polyalkylene glycols), in component (A) may be, for example, preferably 50 mol or more, more preferably 60 mol or more, and preferably 90 mol or less, more preferably 80 mol or less.

Component (A) may have, for example, constituent units other than constituent units derived from polyhydric alcohols (including polyalkylene glycols) and constituent units derived from polybasic acids to the extent that the effects of the present invention are not impaired.

Component (A) can be obtained, for example, by copolycondensing the above raw material monomers, i.e., polyalkylene glycols, polyhydric alcohols (excluding polyalkylene glycols), polybasic acids, and, optionally, raw material monomers other than the foregoing. The copolycondensation method is not particularly limited, and, for example, a method for producing an oil-in-water emulsion of a polyester described in JP-A S50-3480 can be used. The amount of polyalkylene glycol charged as a raw material monomer relative to the total amount of all raw material monomers charged for component (A) may be preferably 10 mass% or more and preferably 30 mass% or less.

An acid value (in accordance with JIS K 0070) of the polyester of component (A) may be, for example, preferably 5 mg KOH/g or more, more preferably 8 mg KOH/g or more, from the viewpoint of stability in water, and preferably 18 mg KOH/g or less, more preferably 12 mg KOH/g or less, further preferably 11.5 mg KOH/g or less, furthermore preferably 11 mg KOH/g or less, from the viewpoint of formation of a coating film.

A glass transition temperature of the polyester of component (A), as measured by DSC (differential scanning calorimeter), may be, for example, preferably -30°C or more, more preferably -15°C or more, and preferably 20°C or less, more preferably 10°C or less, from the viewpoint of uniformity of a curing coating film. The glass transition temperature can be adjusted by changing the composition ratio of the raw material monomers.
A number-average molecular weight of the polyester of component (A) may be, for example, preferably 500 or more, more preferably 800 or more, and preferably 5,000 or less, more preferably 3,000 or less, from the viewpoint of formation of a coating film.
A weight-average molecular weight of the polyester of component (A) may be, for example, preferably 2,000 or more, more preferably 4,000 or more, and preferably 15,000 or less, more preferably 10,000 or less, from the viewpoint of formation of a coating film.
In the present invention, weight-average molecular weight and number-average molecular weight can be determined by the following gel permeation chromatography (GPC) method.

(i) Preparation of sample solution

The sample is dissolved in tetrahydrofuran at 40°C to obtain a solution having a concentration of 0.5 g/100 mL. Next, this solution is filtered through "DISMIC-25JP" (manufactured by Toyo Roshi Kaisha, Ltd.), a PTFE-type membrane filter having a pore size of 0.20 μm, to remove insoluble components, thereby preparing a sample solution.

(ii) Molecular weight measurement

Using a measuring instrument and analytical columns listed below, tetrahydrofuran is flowed as an eluent at a flow rate of 1 mL/min, and the columns are stabilized in a constant-temperature bath at 40°C. 100 μL of the sample solution is injected thereto for measurement. The molecular weight of the sample is calculated on the basis of a calibration curve prepared in advance. This calibration curve is prepared using, as reference samples, several types of monodisperse polystyrene (A-500 ($5.0 \times 10^2$), A-1000 ($1.01 \times 10^3$), A-2500 ($2.63 \times 10^3$), A-5000 ($5.97 \times 10^3$), F-1 ($1.02 \times 10^4$), F-2 ($1.81 \times 10^4$), F-4 ($3.97 \times 10^4$), F-10 ($9.64 \times 10^4$), F-20 ($1.90 \times 10^5$), F-40 ($4.27 \times 10^5$), F-80 ($7.06 \times 10^5$), and F-128 ($1.09 \times 10^6$); manufactured by Tosoh Corporation). The values in parentheses indicate molecular weights.

Measuring instrument: "HLC-8220GPC" (manufactured by Tosoh Corporation)

Analytical columns: "TSKgel GMHXL" + "TSKgel G3000HXL" (manufactured by Tosoh Corporation)

The coating curing agent for hydraulic compositions of the present invention contains, for example, component (A) and water, and preferably further contains component (B) described below. The coating curing agent of the present invention in a water-containing form can be obtained by mixing water with component (A) obtained by reacting the raw material monomers. Alternatively, when component (A) is produced using an aqueous medium, a reaction product containing component (A) and water is obtained, and, for example, this reaction product can be used as it is as the coating curing agent for hydraulic compositions of the present invention. The coating curing agent for hydraulic compositions of the present invention may be, for example, an aqueous dispersion of component (A).
Component (A) may be, for example, in particulate form. The coating curing agent for hydraulic compositions of the present invention preferably contains, for example, particles of component (A). The coating curing agent for hydraulic compositions of the present invention may be, for example, in a form in which particles of component (A) are dispersed in water, i.e., an aqueous dispersion of component (A). When component (A) is in particulate form, an average particle size of component (A) may be, for example, preferably 20 nm or more, more preferably 40 nm or more, and preferably 400 nm or less, more preferably 200 nm or less, from the viewpoints of stability in water and moisture retention performance of a coating film. The average particle size is measured using a laser diffraction particle size analyzer "LA-920" (manufactured by HORIBA, Ltd.).
Preferable examples of component (A) include, for example, a polyester having constituent units derived from polyalkylene glycol, in an amount of, for example, 1 mol% or more and 30 mol% or less, among all constituent units; constituent units derived from aromatic dihydric alcohols, preferably alkylene oxide adducts of bisphenol A, in an amount of 30 mol% or more and 65 mol% or less, among all constituent units; and constituent units derived from dihydric carboxylic acids, preferably aromatic dihydric carboxylic acids, preferably terephthalic acid, in an amount of 30 mol% or more and 50 mol% or less, among all constituent units.
In addition to the above component (A), the coating curing agent for hydraulic compositions of the present invention may contain (B) a thermoplastic resin [hereinafter component (B)]. The thermoplastic resin of component (B) excludes the polyester as component (A).
Component (B) may be, for example, (B1) one or more selected from poly(meth)acrylic acid, poly(meth)acrylic

acid ester, styrene-acrylic copolymer, polyvinyl acetate, ethylene-vinyl acetate copolymer, styrene-butadiene rubber, isoprene rubber, chloroprene rubber, and natural rubber (hereinafter component (B1)), and may be preferably one or more selected from styrene-acrylic copolymer and styrene-butadiene rubber.

Component (B) may be two or more selected from the thermoplastic resins listed above as component (B1). When component (B) is two or more selected from the thermoplastic resins listed as component (B1), it may be a combination of styrene-acrylic copolymer and styrene-butadiene rubber. In this case, a content of styrene-acrylic copolymer in the total of styrene-acrylic copolymer and styrene-butadiene rubber may be, for example, preferably 40 mass% or more, more preferably 50 mass% or more, and, for example, preferably 100 mass% or less, more preferably 80 mass% or less.

A glass transition temperature of the thermoplastic resin of component (B), as measured by DSC (differential scanning calorimeter), may be, for example, preferably -30°C or more, more preferably -20°C or more, and preferably 5°C or less, more preferably 0°C or less, from the viewpoint of moisture retention performance of a coating film.

A number-average molecular weight of the thermoplastic resin of component (B) may be, for example, preferably 100 or more, more preferably 500 or more, and preferably 30,000 or less, more preferably 20,000 or less, from the viewpoint of moisture retention performance of a coating film.

A weight-average molecular weight of the thermoplastic resin of component (B) may be preferably 1,000 or more, more preferably 2,000 or more, and preferably 200,000 or less, more preferably 100,000 or less, from the viewpoint of moisture retention performance of a coating film.

Component (B) may be, for example, in particulate form. The coating curing agent for hydraulic compositions of the present invention preferably contains, for example, particles of component (B). The coating curing agent for hydraulic compositions of the present invention may be, for example, in a form in which particles of component (B) are dispersed in water.

When component (B) is in particulate form, an average particle size of component (B) may be, for example, preferably 20 nm or more, more preferably 50 nm or more, and preferably 400 nm or less, more preferably 200 nm or less. The average particle size of component (B) is calculated by the same measurement method as that for the average particle size of component (A).

When the coating curing agent for hydraulic compositions of the present invention contains component (B), a mass ratio of a content of component (B) to a content of component (A) [(B)/(A)], and further, when component (B) is component (B1), a mass ratio of a content of component (B1) to a content of component (A) [(B1)/(A)], may be, for example, preferably 0.3 or more, more preferably 0.35 or more, further preferably 0.45 or more, furthermore preferably 0.7 or more, and preferably 5 or less, more preferably 3.75 or less, further preferably 3 or less, from the viewpoint of moisture retention performance of a coating film. When the coating curing agent for hydraulic compositions of the present invention contains component (B), for example, a polyester having an acid value of more than 18 mg KOH/g (excluding component (A)) [hereinafter component (B2)] may be used as component (B), and a mass ratio of a content of component (B2) to a content of component (A) [(B2)/(A)] may be, for example, preferably less than 0.1, from the viewpoint of formation of a coating film.

The coating curing agent for hydraulic compositions of the present invention may further contain, for example, water. Deionized water, ionexchange water, or tap water can be used as the water. The coating curing agent for hydraulic compositions of the present invention preferably contains particles of component (A), particles of component (B), and water. For example, the coating curing agent for hydraulic compositions of the present invention may be an aqueous dispersion of components (A) and (B).

The coating curing agent for hydraulic compositions of the present invention may contain component (A) in an amount of, for example, preferably 10 mass% or more, more preferably 20 mass% or more, from the viewpoint of stability in water, and, for example, preferably 60 mass% or less, more preferably 50 mass% or less, from the viewpoint of viscosity suitable for application to a hydraulic composition material. The above content of component (A) is preferable when the coating curing agent for hydraulic compositions of the present invention contains water.

When the coating curing agent for hydraulic compositions of the present invention contains component (B), a total content of component (A) and component (B) in the coating curing agent for hydraulic compositions may be, for example, preferably 20 mass% or more, more preferably 30 mass% or more, and preferably 60 mass% or less, more preferably 50 mass% or less, from the viewpoints of viscosity suitable for application to a hydraulic composition material and moisture retention performance of a coating film. This total content of component (A) and component (B) is preferable when the coating curing agent for hydraulic compositions of the present invention contains water.

In the coating curing agent for hydraulic compositions of the present invention, in addition to component (A) and component (B) blended as necessary, for example, a defoamer, a stabilizer, a pigment, a preservative, an antioxidant, and the like can be blended.

The coating curing agent for hydraulic compositions of the present invention is not particularly limited in the method for mixing component (A) and component (B) blended as necessary, and is prepared by mixing components (A) and (B) in any ratio using a usual stirring device such as a homogenizer or the like. Preferably, it is prepared by mixing an aqueous dispersion of component (A) and an aqueous dispersion of component (B) in any ratio using the stirring device.

A hydraulic composition to be treated with the coating curing agent for hydraulic compositions of the present invention may contain, for example, a hydraulic powder and water.

Examples of hydraulic powders include, for example, cements such as ordinary Portland cement, high early strength Portland cement, ultra high early strength Portland cement, sulfate-resisting Portland cement, low-heat Portland cement, white Portland cement, and eco-cement (e.g., JIS R 5214 or the like), etc. From the viewpoints of pavement strength and castability, the hydraulic powder may be preferably ordinary Portland cement or high early strength Portland cement.

Further, the hydraulic powder may contain, for example, blast furnace slag, fly ash, silica fume, anhydrous gypsum, and the like, and may also contain non-hydraulic limestone fine powder and the like. As the hydraulic powder, for example, blast furnace cement, fly ash cement, or silica fume cement, which is a mixture of cement and blast furnace slag, fly ash, silica fume, or the like, may be used. Further, clay such as bentonite or the like may be contained to the extent that the effects of the present invention are not impaired.

In the hydraulic composition to be treated with the coating curing agent for hydraulic compositions of the present invention, a mass ratio of a water content to a hydraulic powder content in the hydraulic composition [water/hydraulic powder], expressed as a mass percentage, may be, for example, preferably 25 mass% or more, more preferably 35 mass% or more, from the viewpoint of uniform application of the curing agent, and preferably 50 mass% or less, more preferably 45 mass% or less, from the viewpoint of strength.

The hydraulic composition to be treated with the coating curing agent for hydraulic compositions of the present invention may contain, for example, any component other than the hydraulic powder.

[Curing method for hydraulic composition]

In an embodiment, the coating curing agent for hydraulic compositions of the present invention can be applied to a surface of a hydraulic composition to be cured to form a resin coating film, and the resin coating film can suppress moisture loss of the hydraulic composition during curing. That is, the present invention provides a curing method for a hydraulic composition containing a hydraulic powder and water, the method including: applying, to a surface of the hydraulic composition, a treatment liquid containing (A) a polyester [hereinafter component (A)] having a constituent unit derived from a polyalkylene glycol, and water; and thereafter curing the hydraulic composition.

The treatment liquid preferably contains, for example, component (B) described above. Specific examples and preferable examples or the like of component (A) used in the curing method of the present invention and component (B) optionally used therein may be the same as those described above for the coating curing agent for hydraulic compositions of the present invention. Further, the hydraulic composition used in the curing method of the present invention may contain, for example, the hydraulic powder described above and water, and specific examples and preferable examples or the like of the hydraulic powder may be the same as those described above. Further, matters described for the coating curing agent for hydraulic compositions of the present invention and matters described for the curing method of the present invention can be applied to each other.

The treatment liquid can be prepared, for example, by mixing component (A), water, and optionally component (B).

When the coating curing agent for hydraulic compositions of the present invention contains component (A), water, and optionally component (B), the coating curing agent can be used as it is as the treatment liquid, provided that the contents of component (A) and component (B) are suitable for application to a hydraulic composition. Therefore, the coating curing agent for hydraulic compositions of the present invention may also serve as the treatment liquid.

In another embodiment of the curing method of the present invention, the treatment liquid, for example, a treatment liquid containing the coating curing agent for hydraulic compositions of the present invention and water is applied to a surface of the hydraulic composition during curing. The treatment liquid is applied after preparation of the hydraulic composition, and can be applied to the surface of the hydraulic composition within, for example, 8 hours from a point in time at which the hydraulic powder and kneading water first come into contact during preparation of the hydraulic composition, and can also be applied within, for example, preferably 60 minutes. In the present invention, the kneading water may be water, or may contain water and other components such as the coating curing agent for hydraulic compositions of the present invention, other components used in a hydraulic composition, and the like.

In the curing method of the present invention, the treatment liquid is applied after preparation of the hydraulic composition, and, from the viewpoint of improving work efficiency, it can be applied, for example, within preferably 60 minutes from the point in time at which the hydraulic powder and kneading water first come into contact during preparation of the hydraulic composition, thereby suppressing moisture loss of the hydraulic composition during curing.

In the curing method of the present invention, the treatment liquid may be, for example, a treatment liquid containing the coating curing agent for hydraulic compositions of the present invention and water. That is, the treatment liquid can contain, for example, component (A), water, and, if necessary, component (B). The treatment liquid can be applied to a surface of the hydraulic composition during curing, for example, by coating or by sprinkling and the like.

The treatment liquid can be applied to a surface of the hydraulic composition, for example, by coating. The coating method may use, for example, a brush, a roller, a known spray applicator, and a pump sprayer, etc.

Further, the treatment liquid can be applied to a surface of the hydraulic composition, for example, by sprinkling. The sprinkling method may use a spray, a watering can, a hand pump sprayer, and the like.

The treatment liquid can be applied to a surface of the hydraulic composition in an amount of, for example, preferably 100 $g/m^2$ or more, more preferably 150 $g/m^2$ or more, from the viewpoint of moisture retention performance, and preferably 300 $g/m^2$ or less, more preferably 250 $g/m^2$ or less, from the viewpoint of uniform application on the surface.

In the curing method of the present invention, the amount of component (A) applied to a surface of the hydraulic composition may be, for example, preferably 10 $g/m^2$ or more, more preferably 20 $g/m^2$ or more, from the viewpoint of moisture retention performance, and preferably 110 $g/m^2$ or less, more preferably 60 $g/m^2$ or less, from the viewpoint of formation of a coating film. In order for the application amount of component (A) to fall within this range, it is preferable to adjust the concentration of component (A) in the treatment liquid and/or the amount of the treatment liquid applied to a surface of the hydraulic composition.

The curing method of the present invention may include: forming a water layer on a surface of the hydraulic composition; applying the treatment liquid to the water layer; and thereafter curing the hydraulic composition. The water layer may be, for example, a water layer formed by separated water (bleed water, bleeding water) occurring on a surface of the hydraulic composition after casting, a water layer formed by water supplied to a surface of the hydraulic composition after casting, or the like. The separated water can be generated by physical means, for example, by vibrating the hydraulic composition after casting, and the like. Further, the separated water may also be naturally generated by the casting operation. When the separated water is naturally generated, conventionally it has been necessary to apply a coating curing agent after the separated water disappears; however, the coating curing agent of the present invention can be applied while the separated water remains, thereby making it possible to improve work efficiency.

When the treatment liquid is applied to the water layer in the curing method of the present invention, a thickness of the water layer may be, for example, preferably 0.1 mm or more and preferably 1 mm or less.

When the treatment liquid is applied to the water layer in the curing method of the present invention, the application amount ($g/m^2$) of component (A) per unit area is preferably within the above range.

In the curing method of the present invention, a coating film, specifically a curing coating film, can be formed on a surface of the hydraulic composition. The time required for formation of a coating film by the coating curing agent for hydraulic compositions of the present invention after application to a surface of the hydraulic composition varies depending on environmental conditions such as temperature, humidity, and the like. For example, in an environment at a temperature of 20°C and a humidity of 60% RH, the coating film is formed, for example, after an elapsed time of preferably 1 hour or more, more preferably 2 hours or more, from the application.

In the curing method of the present invention, a mass ratio of a water content to a hydraulic powder content in the hydraulic composition [water/hydraulic powder], expressed as a mass percentage, is, for example, preferably 25 mass% or more, more preferably 35 mass% or more, from the viewpoint of uniform application of the curing agent, and preferably 50 mass% or less, more preferably 45 mass% or less, from the viewpoint of strength. The treatment liquid may be applied to such a hydraulic composition.

The coating curing agent for hydraulic compositions and the curing method of the present invention can also be used as a coating curing agent and a curing method for, for example, the following applications: concrete pavement, concrete materials as road-side structures, concrete blocks, tunnel lining concrete, 3D printer molded bodies for building materials, cement boards, and the like.

The present invention discloses the following coating curing agent for hydraulic compositions and curing method using a coating curing agent for hydraulic compositions.

<1> A coating curing agent for hydraulic compositions, containing (A) a polyester having a constituent unit derived from a polyalkylene glycol.

<2> The coating curing agent for hydraulic compositions according to <1>, wherein an acid value of the polyester of component (A) is 5 mg KOH/g or more, preferably 8 mg KOH/g or more, and 18 mg KOH/g or less, preferably 12 mg KOH/g or less, preferably 11.5 mg KOH/g or less, preferably 11 mg KOH/g or less.

<3> The coating curing agent for hydraulic compositions according to <1> or <2>, wherein a content of component (A) is 10 mass% or more, preferably 20 mass% or more, and 60 mass% or less, preferably 50 mass% or less.

<4> The coating curing agent for hydraulic compositions according to any one of <1> to <3>, wherein a proportion of constituent units derived from polyalkylene glycol among all constituent units of the polyester of component (A) is 1 mol% or more, preferably 1.5 mol% or more, preferably 2 mol% or more, and 30 mol% or less, preferably 20 mol% or less, preferably 10 mol% or less, preferably 6 mol% or less.

<5> The coating curing agent for hydraulic compositions according to any one of <1> to <4>, wherein a weight-average molecular weight of the polyester of component (A) is 2,000 or more, preferably 4,000 or more, and 15,000 or less, preferably 10,000 or less.

<6> The coating curing agent for hydraulic compositions according to any one of <1> to <5>, wherein component (A) has constituent units derived from aromatic polyhydric alcohols, preferably constituent units derived from alkylene oxide adducts of bisphenol A.

<7> The coating curing agent for hydraulic compositions according to any one of <1> to <6>, containing (B) a thermoplastic resin.

<8> The coating curing agent for hydraulic compositions according to <7>, wherein component (B) is one or more selected from poly(meth)acrylic acid, poly(meth)acrylic acid ester, styrene-acrylic copolymer, polyvinyl acetate, ethylene-vinyl acetate copolymer, styrene-butadiene rubber, isoprene rubber, chloroprene rubber, and natural rubber.

<9> The coating curing agent for hydraulic compositions according to <7> or <8>, wherein a total content of component (A) and component (B) is 20 mass% or more, preferably 30 mass% or more, and preferably 60 mass% or less, preferably 50 mass% or less.

<10> The coating curing agent for hydraulic compositions according to any one of <7> to <9>, wherein a mass ratio of a content of component (B) to a content of component (A) [(B)/(A)] is 0.3 or more, preferably 0.35 or more, preferably 0.45 or more, preferably 0.7 or more, and 5 or less, preferably 3.75 or less, preferably 3 or less.

<11> A method for producing a coating curing agent for hydraulic compositions, the coating curing agent containing (A) a polyester having a constituent unit derived from a polyalkylene glycol, wherein an amount of polyalkylene glycol charged, relative to a total amount of all raw material monomers charged for component (A), is 10 mass% or more and 30 mass% or less.

<12> A curing method for a hydraulic composition containing a hydraulic powder and water, the method including:

applying, to a surface of the hydraulic composition, a treatment liquid containing the polyester according to any one of <1> to <6> and water; and
thereafter curing the hydraulic composition.

<13> The curing method for a hydraulic composition according to <12>, wherein the treatment liquid is applied to a surface of the hydraulic composition within 8 hours from a point in time at which the hydraulic powder and kneading water first come into contact during preparation of the hydraulic composition.

<14> The curing method for a hydraulic composition according to <12> or <13>, wherein the treatment liquid is applied to a surface of the hydraulic composition within 60 minutes.

<15> The curing method for a hydraulic composition according to any one of <12> to <14>, the method including:

forming a water layer on a surface of the hydraulic composition;
applying the treatment liquid to the water layer; and
thereafter curing the hydraulic composition.

<16> The curing method for a hydraulic composition according to any one of <12> to <15>, wherein a method for applying the treatment liquid is coating or spraying.

<17> The curing method for a hydraulic composition according to any one of <12> to <16>, wherein a mass ratio of a water content to a hydraulic powder content in the hydraulic composition [water/hydraulic powder], expressed as a mass percentage, is 25 mass% or more, preferably 35 mass% or more, and 50 mass% or less, preferably 45 mass% or less.

Examples

Various physical properties were measured and evaluated by the methods described below.

Component (A)

(a1): Polyester described in Production Example 1
(a2): Polyester described in Production Example 2 Comparative (A): Polyester described in Production

Example 3

Component (B)

(b1) Styrene-acrylic copolymer: "Pegarl 809" manufactured by KOATSU GAS KOGYO CO., LTD. (an anionic emulsion having a solid content of 52.5 mass%; pH = 8; Tg = -16°C)
(b2) Styrene-acrylic copolymer: "Joncryl PDX-7182" manufactured by BASF (an emulsion having a solid content of 36.5 mass%; pH = 8.0; Tg = 5°C)
(b3) Styrene-acrylic copolymer: an emulsion having a solid content of 50 mass%; pH = 10

Production Example 1 (method for producing polyester (a1))

In a reaction vessel equipped with a stirring device, a thermometer, a stainless-steel stirring rod, a nitrogen gas inlet, and a dehydration tube, 5,086.7 g (91 mol) of a polyoxypropylene (2.2 mol) adduct of bisphenol A and 45 g of tin(II) bis(2-ethylhexanoate) were placed, and 1,967.1 g (74.2 mol) of terephthalic acid, 495.1 g (3.1 mol) of polyethylene glycol having an average molecular weight of 1,000, and 1,451.1 g (5.9 mol) of polyethylene glycol having an average molecular weight of 1,540 were charged. The mixture was stirred at 160 to 220°C for 8 hours under a stream of nitrogen gas. When the acid value of the polyester became 13 or less, the reaction was terminated to obtain polyester (a1). The reaction product was cooled to 100°C and then gradually poured into water at 76 to 80°C with stirring, thereby obtaining a homogeneous emulsion (solid content: 28 mass%) containing polyester (a1). The emulsion was used for preparing a coating curing agent for hydraulic compositions. The resulting polyester (a1) had a glass transition temperature (Tg) of -10.1°C, an acid value of 11.9 mg KOH/g, and a weight-average molecular weight of 4,632. Various physical properties of component (A) were evaluated by the methods described below.

Production Example 2 (method for producing polyester (a2))

An emulsion (solid content: 28 mass%) containing polyester (a2) was obtained by carrying out the reaction in the same manner as in Production Example 1, except that the monomer composition of the raw material monomers was changed to the formulation shown for polyester (a2) in Table 1. The emulsion was used for preparing a coating curing agent for hydraulic compositions. The resulting polyester (a2) had a glass transition temperature (Tg) of -5.4°C, an acid value of 10.5 mg KOH/g, and a weight-average molecular weight of 6,044.

Production Example 3 (method for producing comparative polyester (A))

In a 5-L four-neck flask equipped with a thermometer, a thermocouple, a stainless-steel stirring rod, a downflow condenser, and a nitrogen inlet tube, the components shown for comparative polyester (A) in Table 1 were placed, and an esterification catalyst (25 g of tin(II) bis(2-ethylhexanoate)) was added under a nitrogen atmosphere. The mixture was heated to 215°C over 3 hours and, after reaching 215°C, was held at that temperature for 5 hours. Thereafter, the reaction was carried out under reduced pressure at 8.0 kPa for 1 hour, and was continued until the polyester reached a softening point of 101.2°C, thereby producing comparative polyester (A). The reaction product was cooled to 100°C and then gradually poured into water at 76 to 80°C with stirring, thereby obtaining a homogeneous emulsion (solid content: 35 mass%) containing comparative polyester (A). The emulsion was used for preparing a coating curing agent for hydraulic compositions. The resulting comparative polyester (A) had a glass transition temperature (Tg) of 60.0°C, an acid value of 19.8 mg KOH/g, and a weight-average molecular weight of 14,299.

[Glass transition temperature (Tg) of polyester]

Using a differential scanning calorimeter "Q-100" (manufactured by TA Instruments Japan Inc.), a polyester sample (0.01 to 0.02 g on a solids basis) was weighed into an aluminum pan, heated to 200°C, and then cooled from that temperature to 0°C at a cooling rate of 10°C/min. Measurement was then performed during heating to 150°C at a heating rate of 10°C/min. The temperature at the intersection between an extension of the baseline at temperatures below the temperature of the maximum endothermic peak and a tangent line representing the maximum slope from the onset of the peak to the apex of the peak was defined as the glass transition temperature of the polyester.

[Acid value of polyester]

The acid value of the polyester was measured in accordance with the method specified in JIS K 0070:1992, except that the measurement solvent was changed from the mixed solvent of ethanol and ether specified in JIS K

0070:1992 to a mixed solvent of acetone and toluene (acetone: toluene = 1:1 (volume ratio)).

Examples 1 to 11 and Comparative Examples 1 to 3

An emulsion of component (A) and/or an emulsion of component (B), or an emulsion of comparative polyester (A) was stirred at 20°C to 25°C for 1 minute using a stirring blade so that the mass ratio (B)/(A) and the total content of component (A) and component (B) [(A) + (B)] were as shown in Table 2, thereby producing a coating curing agent for hydraulic compositions. In Example 7, as component (B), (b1) and (b3) were used at a mass ratio (b1)/(b3) of 67.7/32.3.
These coating curing agents for hydraulic compositions also serve as the treatment liquid in the curing method of the present invention.

[Moisture loss evaluation]

A cement mortar prepared as described below was cast into a mold (30 cm (length) × 21 cm (width) × 3.7 cm (height); plan area: 0.063 $m^2$) to prepare a cement mortar specimen. The total amount of the specimen, including the mass of the mold, was 2,500 g. After casting, the specimen was compacted by vibration for 90 seconds using a table vibrator. Thereafter, the surface of the specimen was leveled using a trowel. Observation of the specimen surface confirmed that a water layer (bleed water) having a thickness of about 0.1 mm to 0.5 mm was formed on the surface of the cement mortar specimen.
The mass ratio of water to cement (W/C) was 42% (42 parts by mass of water relative to 100 parts by mass of cement). The amount of the fine aggregate was 300 parts by mass relative to 100 parts by mass of cement. The amount of the AE water-reducing agent was 1 part by mass relative to 100 parts by mass of cement. Further, the components used were as follows.

· W: kneading water (tap water (Wakayama City tap water))
· C: ordinary Portland cement (a mixture of products manufactured by TAIHEIYO CEMENT CORPORATION and Sumitomo Osaka Cement Co., Ltd. at a mass ratio of 50/50; specific gravity: 3.16 g/$cm^3$)
· S: fine aggregate (mountain sand from Joyo; specific gravity: 2.50 g/$cm^3$)
· AE water-reducing agent ("Mighty 1000S" manufactured by Kao Corporation)

At 25 minutes after compaction (at 0.5 hours after the point in time when the cement powder and water first came into contact), a coating curing agent for hydraulic compositions shown in Table 2 was sprayed as a mist using a sprayer so as to achieve the application amount shown in Table 2. From 24 hours to 120 hours after spraying the coating curing agent, the mass of the cement mortar specimen was measured every 24 hours in an environment at a temperature of 20°C and a humidity of 60% RH, and the difference from the mass of the cement mortar specimen immediately after casting (2,500 g) was taken as the amount of moisture loss to evaluate the moisture loss suppression effect of the coating curing agent for hydraulic compositions. Table 2 shows the amounts of moisture loss after 24 hours and after 120 hours. Further, relative values of the amounts of moisture loss, with Comparative Example 1 taken as 100, are also shown. For some of the Examples and Comparative Examples, the relationship between the amount of moisture loss and elapsed time is shown in a graph.

[Crack evaluation]

Cracks on the surface of the cement mortar specimen 120 hours after application of the coating curing agent for hydraulic compositions in the moisture loss evaluation described above were visually observed and evaluated according to the following criteria.

A: No cracks, or four or less minute cracks each having a width of 0.1 mm or more and 0.5 mm or less are present.
B: Five or more cracks are present, but all are minute cracks each having a width of 0.1 mm or more and 0.5 mm or less.
C: Ten or more cracks each having a width of 0.5 mm or more are present.

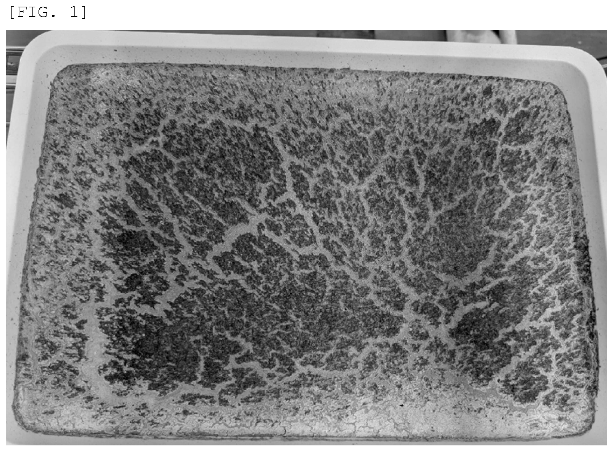

FIG. 1 shows a photograph of the surface of a hydraulic composition 120 hours after application of the coating curing agent for hydraulic compositions of Comparative Example 3. In Comparative Example 3, cracks were formed on the surface to which the coating curing agent for hydraulic compositions was applied.

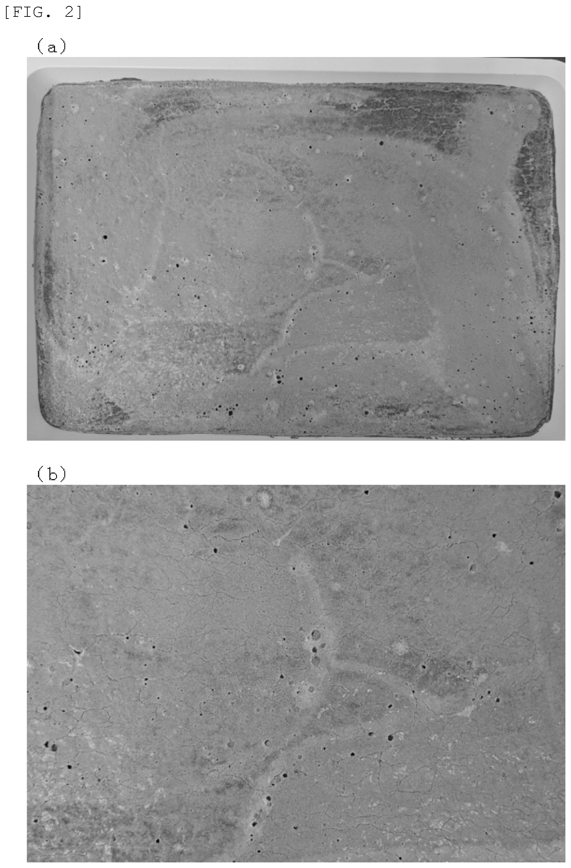

FIG. 2 shows an overall photograph (a) and a partially enlarged photograph (b) of the surface of a hydraulic composition 120 hours after application of the coating curing agent for hydraulic compositions of Example 8.

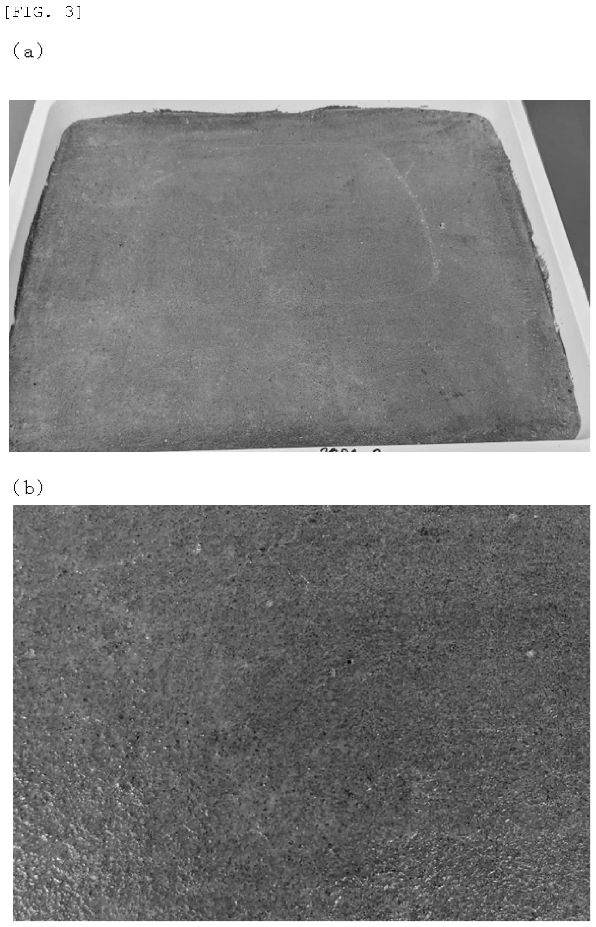

FIG. 3 shows an overall photograph (a) and a partially enlarged photograph (b) of the surface of a hydraulic composition 120 hours after application of the coating curing agent for hydraulic compositions of Example 1.

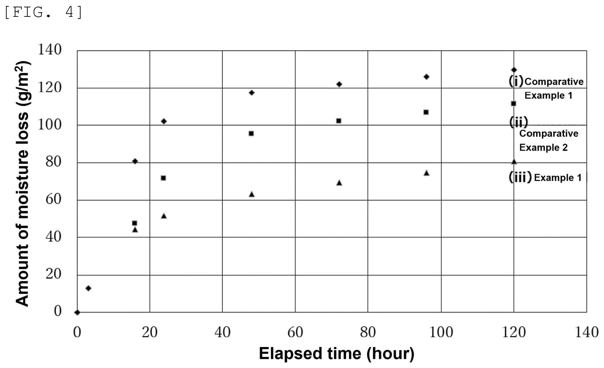

FIG. 4 shows a graph of the amount of moisture loss with time. In FIG. 4, the vertical axis indicates the amount of moisture loss ($kg/m^2$), and the horizontal axis indicates elapsed time after coating with the coating curing agent for hydraulic compositions (temperature: 20°C; humidity: 60% RH). In FIG. 4, (i) indicates the amount of moisture loss of the cement specimen of Comparative Example 1, (ii) indicates the amount of moisture loss of the cement specimen of Comparative Example 2, and (iii) indicates the amount of moisture loss of the cement specimen of Example 1.

[Table 1]

| | | | Component (A) | | | | | | | | Comparative (A) | | | |
|---|---|---|---|---|---|---|---|---|---|---|---|---|---|---|
| | | | (a1) | | | | (a2) | | | | | | | |
| Raw material monomer | Monomer composition | | Charged amount (g) | Proportion among all constituent units (mass%) | Molar ratio | Proportion among all constituent units (mol%) | Charged amount (g) | Proportion among all constituent units (mass%) | Molar ratio | Proportion among all constituent units (mol%) | Charged amount (g) | Proportion among all constituent units (mass%) | Molar ratio | Proportion among all constituent units (mol%) |
| | Alcohol | PO adduct of bisphenol A | 5086.7 | 56.5 | 91 | 52 | 5551.2 | 61.7 | 94 | 54 | 3728 | 74.5 | 100 | 49 |
| | | PEG1000 | 495.1 | 5.5 | 3.1 | 2 | 349.3 | 3.9 | 2.07 | 1 | - | - | - | - |
| | | PEG1540 | 1451.1 | 16.1 | 5.9 | 3 | 1021.2 | 11.3 | 3.93 | 2 | - | - | - | - |
| | Polybasic acid | Terephthalic acid | 1967.1 | 21.9 | 74 | 43 | 2078.3 | 23.1 | 74 | 43 | - | - | - | - |
| | | Fumaric acid | - | - | - | - | - | - | - | - | 1273 | 25.5 | 103 | 51 |

[Table 2]

| | | Coating curing agent for hydraulic compositions | | | | | | Application amount ($g/m^2$) | Evaluation result | | | | |
|---|---|---|---|---|---|---|---|---|---|---|---|---|---|
| | | Component (A) | Component (B) | | Mass ratio (B)/(A) | (A) + (B) (mass%) | Water (mass%) | | Moisture loss evaluation | | | | Crack evaluation |
| | | | | | | | | | Amount of moisture loss (g) | | Relative value (g) | | |
| | | Type | Type | Type | | | | | After 24 hours | After 120 hours | After 24 hours | After 120 hours | After 120 hours |
| Example | 1 | (a1) | (b1) | - | 1.88 | 40.3 | 59.7 | 200 | 51 | 81 | 50.0 | 64.3 | A |
| | 2 | (a2) | (b1) | - | 1.88 | 40.3 | 59.7 | 200 | 72 | 94 | 70.6 | 74.6 | A |
| | 3 | | (b1) | - | 0.94 | 36.2 | 63.8 | 200 | 66 | 86 | 64.7 | 68.3 | A |
| | 4 | | (b1) | - | 0.38 | 32.1 | 67.9 | 200 | 74 | 95 | 72.5 | 75.4 | B |
| | 5 | | (b2) | - | 1.88 | 40.3 | 59.7 | 200 | 70 | 99 | 68.6 | 78.6 | B |
| | 6 | | (b3) | - | 1.79 | 39.0 | 61.0 | 200 | 63 | 80 | 61.8 | 63.5 | A |
| | 7 | (a1) | (b1) | (b3) | 2.77 | 42.2 | 57.8 | 200 | 51 | 65 | 50.0 | 51.6 | A |
| | 8 | | - | - | - | 28.0 | 72.0 | 200 | 70 | 102 | 68.6 | 81.0 | B |
| | 9 | | - | - | - | 39.2 | 60.8 | 280 | 68 | 99 | 66.7 | 78.6 | B |
| | 10 | | (b1) | - | 4.17 | 44.9 | 55.1 | 200 | 70 | 105 | 68.6 | 83.3 | B |
| | 11 | | (b1) | - | 0.94 | 40.3 | 59.7 | 223 | 65 | 84 | 63.7 | 66.7 | A |
| Comparative example | 1 | - | - | - | - | - | 100 | - | 102 | 126 | 100 | 100 | C |
| | 2 | - | (b1) | - | - | 52.5 | 47.5 | 200 | 71 | 111 | 69.6 | 88.1 | C |
| | 3 | Comparative (A) | - | - | - | 35.0 | 65.0 | 200 | 90 | 122 | 88.2 | 96.8 | C |

## Claims

1. A coating curing agent for hydraulic compositions, comprising (A) a polyester [hereinafter component (A)] having a constituent unit derived from a polyalkylene glycol.

2. The coating curing agent for hydraulic compositions according to claim 1, wherein an acid value of the component (A) is 18 mg KOH/g or less.

3. The coating curing agent for hydraulic compositions according to claim 1 or 2, wherein a content of the component (A) is 10 mass% or more and 60 mass% or less.

4. The coating curing agent for hydraulic compositions according to claim 1 or 2, wherein a proportion of constituent units derived from a polyalkylene glycol among all constituent units of the component (A) is 1 mol% or more and 30 mol% or less.

5. The coating curing agent for hydraulic compositions according to claim 1 or 2, further comprising (B) a thermoplastic resin (excluding component (A)) [hereinafter component (B)].

6. The coating curing agent for hydraulic compositions according to claim 5, wherein the component (B) is one or more selected from poly(meth)acrylic acid, poly(meth)acrylic acid ester, styrene-acrylic copolymer, polyvinyl acetate, ethylene-vinyl acetate copolymer, styrene-butadiene rubber, isoprene rubber, chloroprene rubber, and natural rubber.

7. The coating curing agent for hydraulic compositions according to claim 5, wherein a total content of the component (A) and the component (B) is 20 mass% or more and 60 mass% or less.

8. The coating curing agent for hydraulic compositions according to claim 5, wherein a mass ratio of a content of the component (B) to a content of the component (A) [(B)/(A)] is 0.3 or more and 5 or less.

9. A curing method for a hydraulic composition containing a hydraulic powder and water, the method comprising:

   applying, to a surface of the hydraulic composition, a treatment liquid containing (A) a polyester [hereinafter component (A)] having a constituent unit derived from a polyalkylene glycol, and water; and
   thereafter curing the hydraulic composition.

10. The curing method for a hydraulic composition according to claim 9, wherein the treatment liquid is applied to a surface of the hydraulic composition within 60 minutes from a point in time at which the hydraulic powder and kneading water first come into contact during preparation of the hydraulic composition.

11. The curing method according to claim 9 or 10, the method comprising:

   forming a water layer on a surface of the hydraulic composition;
   applying the treatment liquid to the water layer; and
   thereafter curing the hydraulic composition.

12. The curing method according to claim 9 or 10, wherein a mass ratio of a water content to a hydraulic powder content in the hydraulic composition [water/hydraulic powder], expressed as a mass percentage, is 25 mass% or more and 50 mass% or less.

[FIG. 1]

[FIG. 2]

(b)

[FIG. 3]

(a)

(b)

[FIG. 4]

Amount of moisture loss (g/m²)
140
120
100
80
60
40
20
0
0
20
40
60
80
100
120
140
Elapsed time (hour)
(i) Comparative Example 1
(ii) Comparative Example 2
(iii) Example 1

## INTERNATIONAL SEARCH REPORT

International application No.
**PCT/JP2024/040663**

**A. CLASSIFICATION OF SUBJECT MATTER**

***C04B 40/04***(2006.01)i; ***B28B 11/24***(2006.01)i; ***C04B 41/63***(2006.01)i
FI: C04B40/04; B28B11/24; C04B41/63

According to International Patent Classification (IPC) or to both national classification and IPC

**B. FIELDS SEARCHED**

Minimum documentation searched (classification system followed by classification symbols)

C04B40/04; B28B11/24; C04B41/63

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-044943 A (KAO CORPORATION) 03 April 2023 (2023-04-03) entire text, all drawings | 1-12 |
| A | JP 2020-190109 A (KONISHI CO., LTD.) 26 November 2020 (2020-11-26) entire text, all drawings | 1-12 |
| A | JP 2022-025344 A (TAIHEIYO CEMENT CORPORATION) 10 February 2022 (2022-02-10) entire text, all drawings | 1-12 |
| A | WO 2020/158756 A1 (NIPPON SHOKUBAI CO., LTD.) 06 August 2020 (2020-08-06) entire text, all drawings | 1-12 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/040663**

| Patent document cited in search report | Publication date (day/month/year) | Patent family member(s) | Publication date (day/month/year) |
|---|---|---|---|
| JP 2023-044943 A | 03 April 2023 | (Family: none) | |
| JP 2020-190109 A | 26 November 2020 | (Family: none) | |
| JP 2022-025344 A | 10 February 2022 | (Family: none) | |
| WO 2020/158756 A1 | 06 August 2020 | US 2022/0089504 A1<br>entire text, all drawings<br>EP 3919464 A1<br>entire text, all drawings<br>CN 113348157 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014028729 A
- JP 2006248868 A
- JP S503480 A